# EUROPEAN PATENT SPECIFICATION

(11) **EP 3 089 037 B1**
(45) Date of publication and mention of the grant of the patent: **17.07.2019**
(21) Application number: 15165729.3
(22) Date of filing: 29.04.2015
(51) Int. Cl.: G06F 11/36, G06F 17/50

(54) **METHOD FOR CHECKING EQUIVALENCE OF CODE**
VERFAHREN ZUR ÜBERPRÜFUNG DER ÄQUIVALENZ VON CODES
PROCÉDÉ DE VÉRIFICATION D'ÉQUIVALENCE DE CODE

(43) Date of publication of application: 02.11.2016
(73) Proprietor: FRAMATOME, 92400 Courbevoie (FR)
(72) Inventor: KRECKEL, Richard, DE-91054 Erlangen (DE); KÜNZEL, Andreas, DE-91074 Herzogenaurach (DE)
(74) Representative: Lavoix

(56) References cited:
- WO-A1-2010/053603
- US-A1- 2009 300 563
- US-A1- 2011 093 824
- US-B1- 8 464 204

## Description

### Field of the Invention

The invention relates to a computer-implemented method for implementing a set of redundant pieces of software within a safety control system, the method comprising steps for checking the functional equivalence of two pieces of software for safety control systems. It relates to control systems with source code automatically generated from function block diagrams. It also relates to a non-transitory computer-readable storage device. It also relates to a non-transitory computer-readable storage medium. It also relates to a computer program product, a system and a computer.

### Background Art

For the safe and reliable operation of nuclear power plants or other safety-critical systems, electricity and control systems are of paramount importance, especially safety instrumentation & control (I&C) systems. For a given digital safety I&C system with possibly multiple redundant divisions and an engineering system which lets the system engineer specify the software using FBDs (function block diagrams) in multiple subsequent versions, the software needs to be validated for each redundant division and for each version until all acceptance criteria are met.

The overhead of validating each redundant division and each version is considerably large if one considers that there will be significant similarities: Some FBDs will be basically the same in different redundant divisions, only some FBDs will have changed from one version to the next one. Manual modifications to FBDs (on different redundant divisions or from one version to another) have a tendency to alter the generated code in a way that amplifies the differences in the generated code between these versions. This makes it generally impossible to pinpoint the differences in the generated codes.

Up to now all FBDs have to undergo verification and validation (V&V) activities even if their functionality was unchanged. During development or verification and validation of application software, the task might arise to verify that two FBDs are functionally equivalent in order to omit redundant verification of validation activities for functionally equivalent FBDs. The need for this task might be caused by the need to identify function block diagrams which implement the same functions in different redundancies or the need to identify function block diagrams that have changed between different versions of an application.

In order to determine, whether one diagram implements the same functionality as another diagram, a simple line-by-line diff of the source codes of the two diagrams can raise many false positives. This is because the code generator has several degrees of freedom when generating source code for function block diagrams. There might be differences in the source codes ranging from different identifiers for symbols up to a different sequentialization of the function block calls. However, even with these differences, the functionality, i.e. the observable behavior, of the diagrams can be the same. This makes "back-translation" of the generated computer code, for example C code, to function block diagrams within the engineering database very complicated.

Document US8 464 204 B1 discloses a code verification tool that verifies that code generated from a model represents all of the functionality of the model and does not contain any unintended functionality. The code verification tool may receive for examination a model or an intermediate representation (IR) of the model and the generated code or an intermediate representation of the generated code. The code verification tool may create further intermediate representations of the model and/or the generated code in order to compare the functionality presented in both.

The object of the present invention therefore is to provide a method which reliably and accurately allows determining the equivalence of two different pieces of generated FBD source code within the above-described context.

Embodiments relate only to claimed combinations of features. In the following, when the term "embodiment" relates to unclaimed combinations of features, said term has to be understood as referring to examples of the present invention.

### Disclosure of Invention

In a first aspect, the invention relates to a computer-implemented method for implementing a set of redundant pieces of software within a safety control system, wherein at least two redundant pieces of software are engineered from function block diagrams with a plurality of interconnected function blocks, wherein the safety control system comprises several redundant divisions, each division executing at least one safety function specified in at least one of said function block diagrams, and wherein for said two pieces of software the following steps are applied:
a) generating a first instance of compilable source code from a first plurality of function block diagrams by virtue of a first code generator obeying to a first set of sequentialization rules;
b) parsing the first instance of source code and identifying the set of all function block I/O ports and junction points (nodes) and the set of all connections between them (arcs) of the data flow;
c) using the information from step b) to reconstruct a first data flow graph of the first instance of source code in the upstream direction;
d) generating a second instance of compilable source code from a second plurality of function block diagrams by virtue of the same or a second code generator obeying a second set of sequentialization rules;
e) parsing the second instance of source code and identifying the set of all function block I/O ports and junction points (nodes) and the set of all connections between them (arcs) of the data flow;
f) using the information from step e) to reconstruct a second data flow graph of the second instance of source code in the upstream direction;
g) comparing the first identified data flow graph and the second identified data flow graph with each other, node by node, thereby checking if the transitive closure of input up to that node in the second instance of source code is the same as in the first instance of source code, and thereby checking the functional equivalence of the two pieces of software.

The invention is based on the consideration that a simple comparison of the differences of two source codes generated from FBD is not efficient due to possibility of many false positives due to freedom in the code generation, for example in the sequentialization of the function blocks used in the diagram. It would therefore be desirable to have a procedure which abstracts from these differences but maintains the essential information.

Applicant has recognized that a reliable and accurate comparison of two pieces of computer code can be achieved by generating data graphs from the code blocks which contain incoming and outgoing data. The method according to the present invention can reliably determine if parts of two I&C specifications are guaranteed to have the same behavior, even if they span multiple FBDs. It achieves this by parsing the generated (C or any other formally specified) code and traversing the data flow graph for each function block (FB) in the upstream direction. If all upstream FBs are of the same type, have the same parameters, and are linked with other FBs or input signals by equivalent vertices, then they perform the same I&C function. In this way it is possible to prove that two compared sets of FBDs are functionally equivalent.

The method according to the present invention comprises transforming the generated code of FBDs, which is a directed multigraph, into a directed graph which can uniquely model the functionality implemented by the FBD. The representation of the graph is done in a way which allows a unique identification of each node and each vertex in the graph by including all relevant functional properties and the transitive closure of inputs up to each node. This allows a comparison of different FBDs to prove whether they implement the same functionality or not.

The method is a computer-implemented method which runs on a computer, preferably allowing a user to interact with it and preferably connected to a display device on which the user gets shown the result of the code comparison.

In a preferred embodiment, constructing the first data graph in the upstream direction comprises identifying all loops and replacing them with a placeholder such that an infinite recursion is stopped at the loops' delay nodes.

In another preferred embodiment, constructing the second data graph in the upstream direction comprises identifying all loops and replacing them with a placeholder such that an infinite recursion is stopped at the loops' delay nodes. Preferably, a first and/or second plurality of function block diagrams by virtue of said respective first code generator is generated into source code in the C computer language.

Preferably the second set of sequentialization rules is identical to the first set of sequentialization rules.

Advantageously, the first and/or second data graph comprises nodes of the following types:
- function block nodes, representing the body of a function block;
- function block port nodes, representing input or output ports of function blocks;
- signal negator nodes, representing the negation of an analog or binary or other type of signal connected at a port of a function block; and
- signal nodes, representing cross-diagram signals or signals assigned to I/O modules.

Function block nodes preferably comprise as attributes, respectively, the function block type and functionally relevant engineered parameter values, and whereby function block port nodes comprise as attributes, respectively, the direction of the port (input or output for the function block) and a number identifying the port of the respective function block.

According to the invention, the method described above is employed for a safety control system, for example in nuclear power plants.

More precisely, the method described above is employed for a safety control system comprising several redundant divisions, each division executing at least one safety function specified in at least one function block diagram.

In a second aspect, the present invention relates to a non-transitory computer-readable storage device, coupled to a computer and having instructions stored thereon which, when executed on said computer, enable and/or cause the computer to perform operations for checking the functional equivalence of two pieces of software for control systems, the operations comprising an above described method.

In a third aspect the present invention relates to a non-transitory computer-readable storage medium containing instructions which, when loaded into memory of and executed on a computer, enable and/or cause the computer to perform operations for checking the functional equivalence of two pieces of software for control systems, the operations comprising an above described method.

In yet another aspect, the present invention relates to a computer program product which is stored on a non-transitory computer-readable medium such as a flash disk, CD, DVD, hard disk and can be loaded directly into memory of a computer, comprises software code sections which when executed on the computer enables and/or causes said computer to perform a method described above.

In yet another aspect, the invention relates to a system comprising:
- at least one computing device;
- a non-transitory computer-readable storage device, coupled to said computing device and having instructions stored thereon which, when executed on said computer, enable and/or cause said computer to perform operations for checking the functional equivalence of two pieces of software for control systems, the operations comprising a method described above.

In yet another aspect, the invention relates to a computer comprising memory having stored thereon software code sections which when executed on said computer enable and/or cause the computer to perform a method described above.

The advantages of the invention are especially as follows. It is advantageous to work on generated code as opposed as to work on the graphical specification because in a regulated environment this is closer to the final product and avoids questions regarding the reliability of the translation step from graphical specification to code (the code generation). It is another advantage to be able to fully reconstruct the dataflow graph as opposed as to working FB by FB (as has been done by previous tools) because this captures all input data and hence makes a statement that "this piece of software does the same as that piece of software" 100% reliable.

### Brief description of the drawings

Further features and advantages of the present invention shall become clearer from the following detailed description of some of its preferred embodiments, made with reference to the attached schematic drawings and given as an indication and not for limiting purposes.

In particular, the attached drawings are included to provide a further understanding of the invention and are incorporated in and constitute a part of this specification. The drawings together with the description explain the principles of the invention. In these drawings:
FIG. 1 shows a schematic diagram of protection functions in a safety control system;
FIG. 2 shows a diagram of function blocks and two different sequentializations of function blocks in the generated source code of this diagram:
FIG. 3 shows a comparison of generated FBD source codes using their graph representation;
FIG. 4 shows a first function block diagram comprising function blocks, connection lines and a signal negation;
FIG. 5 shows a visual representation of the graph modelling the function block diagram of FIG. 4;
FIG. 6 shows a second function block diagram comprising function blocks and connection lines; and
FIG. 7 shows a visual representation of the graph modelling the function block diagram of FIG. 6.

### Detailed Description of the Invention

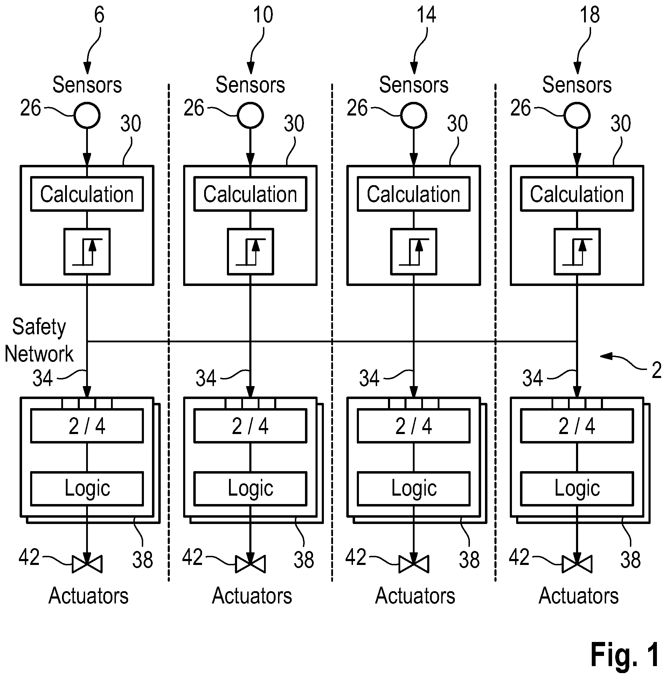

A typical structure 2 of protection functions is shown in FIG. 1. It consists of a set of I&C functions 6, 10, 14, 18 implemented in multiple redundancies in a control system for a nuclear power plant. A first of these functions 6 receives a signal from one or more sensors 26 which is then processed in a computational block 30. The calculated result is then passed through a safety network 34 to another computational block 38 in which it is processed into a signal for controlling one or more actuators 42. The other functions 10, 14, 18 are realized in the same manner.

In order to implement functionality with multiple redundancies, the corresponding function block diagrams for functions 6, 10, 14, 18 are implemented multiple times. In a typical protection system, certain diagrams have to be implemented up to four times to implement such redundant division even though the logic implemented by these diagrams is the same. For these function block diagrams, code is generated independently which results in four different source codes implementing equivalent functionality.

In a preferred embodiment of the method, function block diagrams are converted from an engineering database to ANSI C code by a code generator. In order to have unique identifiers in the generated source codes, two function block diagrams of one specification differ at least in naming of symbols. For example, symbols related to a function block diagram include the internal numerical ID of the diagram within their name. Additionally, identifiers in the generated code can also differ between two revisions of one diagram's source code. Reasons might be changes to the diagram itself, as well as changes to signals interconnecting diagrams. This is due to the fact that symbols in the generated codes may use internal database keys of the employed database that cannot be engineered. One example is specification-wide unique identifiers of cross-diagram signals.

The following samples show parts of function block diagram source codes, using numerical diagram IDs (number 99) and numerical signal IDs (number 1111).

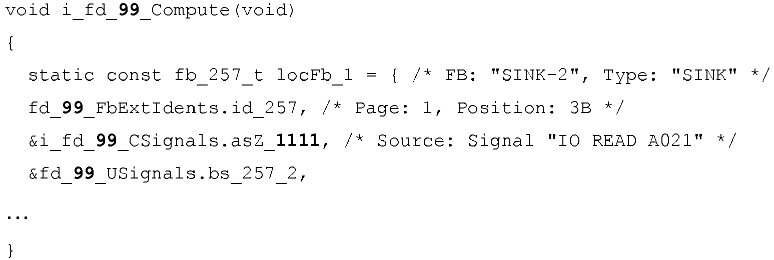

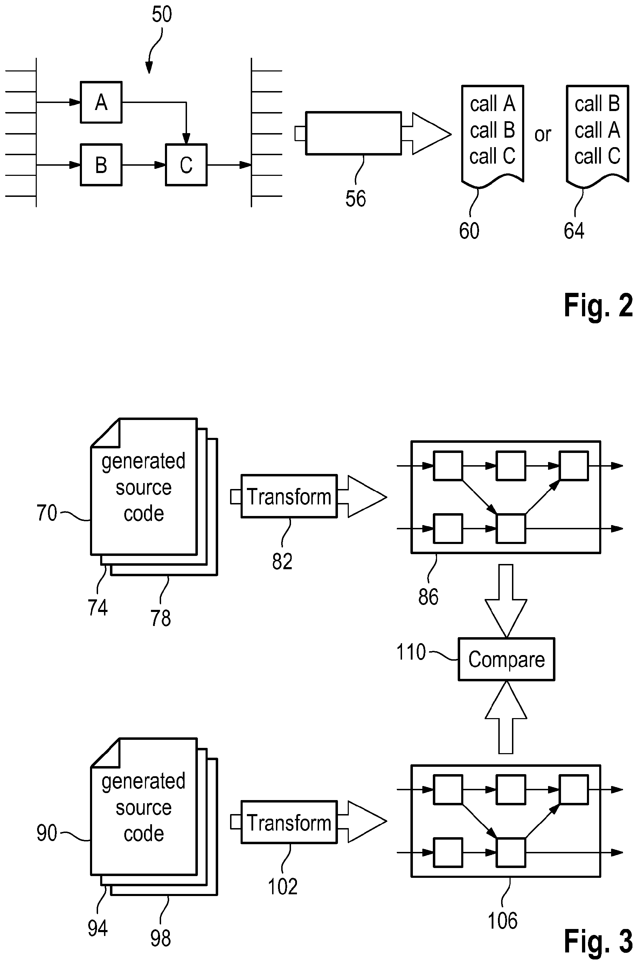

Another point where two functionally identical diagrams can differ in their source code is the sequentialization of function block calls. The same diagram can result in different permutations of function block sequentialization while still being functionally equivalent (i.e. have the same observable behavior). For example, in FIG. 2 a very simple diagram 50 is shown with three different function calls A, B, and C which can, when converted into source code by a code generator 56, result in two sequentializations 60, 64 which both correctly implement the diagram. In sequentialization 60, first function A is called, then function B is called and then function C is called. In sequentialization 64, first function B is called, then function A is called and then function C is called.

The following samples show parts of function block diagram source code containing IDs depending on the sequentialization of the function blocks.

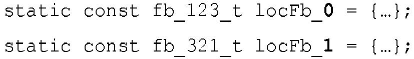

All sequentializations are considered to be functionally equivalent if they comply with a set of given sequentialization rules. The code generator used in the present embodiment generates source code for function block diagrams which adhere to these rules. The exchange of data between function blocks within one function block diagram is strictly defined and uses dedicated objects for storing this data.

Equivalence checking of function block diagrams can be used as a formal procedure of verifying that the code generated from function block diagrams behaves exactly as specified in terms of a circuitry on function block diagrams for any sequence of input signals or a formal procedure of verifying that one set of code generated from function block diagrams behaves exactly as another set.

In order to compare function block diagrams based on the dataflow graphs they implement, the respective code is transformed into such a directed graph.

In FIG. 3, a first set of three pieces of source code 70, 74, 78 generated from function block diagrams in a transformation step 82 is transformed into a first data flow graph 86. A second set of three pieces of source code 90, 94, 98 generated from function block diagram is in a transformation step 102 transformed into a second data flow graph 106. In a comparing step 110, the data flow graphs 86, 106 are compared. If they are identical, the equivalence of the group of source codes 70, 74, 78 and the group of source codes 90, 94, 98 is asserted.

When comparing two directed graphs, by definition the graphs are equivalent if the two sets V (vertices) and A (nodes) are the same in both graphs. Such a comparison requires a unique identification of each node. With the invented method the nodes can be uniquelly idenfied by adding the nodes type, functionally relevant properties of the node and the transitive closure of all node inputs to the identification of each node.

A graph describing the logics of a function block diagram preferably consists of the following node types.
- function block nodes, representing the "body" of a function block;
- function block port nodes, representing input or output ports of function blocks;
- signal negator nodes, representing the negation of an analog or binary or other type of signal connected at a port of a function block; and
- signal nodes, representing cross-diagram signals or signals assigned to I/O modules.

Other attributes of function block diagrams which are relevant for the implemented functionality are modelled as properties of the graph's nodes. The following attributes are preferably taken into account.

For function block nodes:
- the function block's type;
- functionally relevant engineered parameter values.

For function block port nodes:
- the direction of the port (input or output),
- a identification of the port of the respective function block.

The dataflow between the engineered function blocks, function block diagrams and/or I/O modules is modelled by the directed edges which connect the nodes of the graph.

By creating a dataflow graph using the above mentioned nodes, their properties and interconnections of a function block diagram, the functionality implemented by the function block diagram can be modelled and the resulting graph can be compared to other graphs by comparing the contained nodes and edges

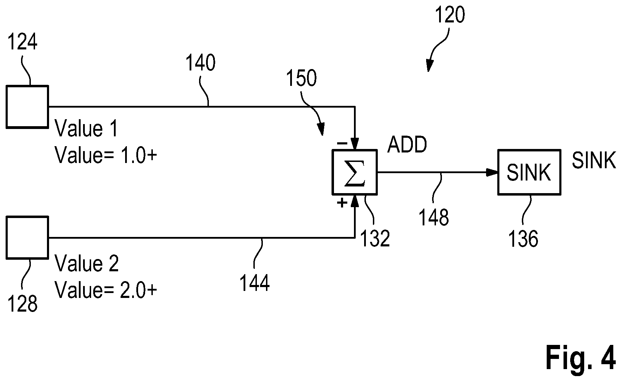

FIG. 4 shows a very simple function block diagram 120 containing four function blocks 124, 128, 132, 136, three connection lines 140, 144, 148 and one signal negation 150 at the upper input of the block 132 which is an ADD block, adding the negated signal transmitted from block 124 via connection line 140 and the signal transmitted from block 128 via connection line 144.

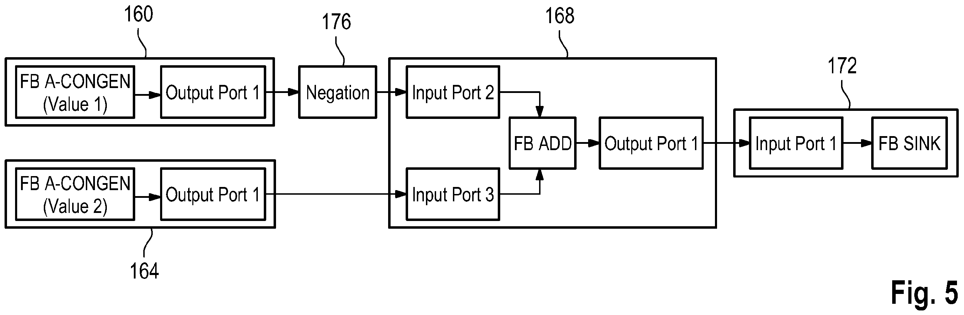

A visual representation of a graph modelling this function block diagram 120 is shown in FIG. 5. The boxes 160, 164, 168, 172 only mark the function block boundaries and do not model any nodes within the graph. The box 176 represents the signal negation 150 shown in FIG. 4.

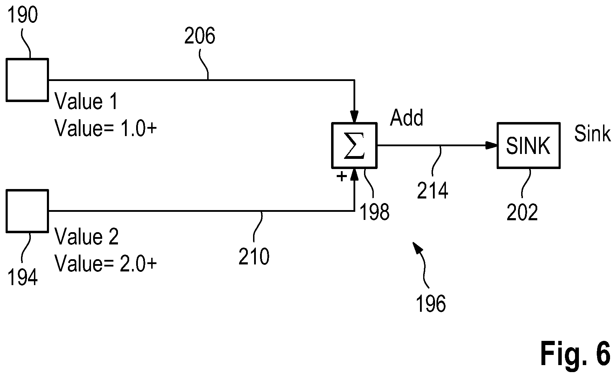

FIG. 6 shows another simple diagram 196, implementing a slightly different logic. It contains four function blocks 190, 194,198, 202, three connection lines 206, 210, 214 but is missing the signal negation at the input of block 198 which is an ADD block. The missing signal negation is the only difference between diagrams 120 and 196.

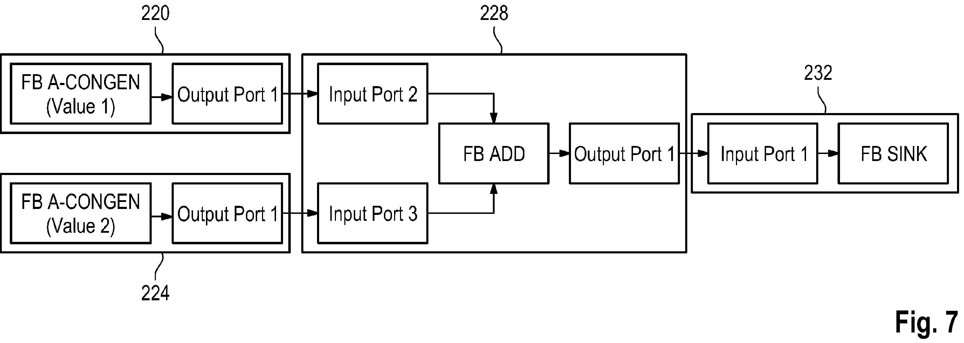

The corresponding graph is displayed in FIG. 7. The boxes 220, 224, 228, 232 only mark the function block boundaries and do not model any nodes within the graph. The identification of the nodes contained within the graphs has to include the above named properties as well as the transitive closure of inputs of the nodes. The following example shows a more formal representation of the nodes shown in FIG. 7 including hierarchical information about the nodes inputs. For easier reading the example does not contain any other functional properties within the node identifiers.
- A-CONGEN()
- Out1(A-CONGEN())
- A-CONGEN()
- Out1(A-CONGEN())
- In2(Out1(A-CONGEN())))
- In3(Out1(A-CONGEN()))
- ADD(In2(Out1(A-CONGEN()))),In3(Out1(A-CONGEN())))
- Out1(ADD(In2(Out1(A-CONGEN()))),In3(Out1(A-CONGEN()))))
- In1(Out1(ADD(In2(Out1(A-CONGEN()))),In3(Out1(A-CONGEN())))))
- SINK(In1(Out1(ADD(ln2(Out1(A-CONGEN()))),In3(Out1(ACONGEN()))))))
Combining such a representation of nodes with all relevant functional properties allows a unique identification of each node regarding the functionality implemented using this node.

Note: Looking at the example above, one can see that two functional equivalent nodes might have the same identifier, which is absolutely correct. For the example this is true for the two A-CONGEN function blocks and their output signals. In case they use different parameterization, the identification would differ due to these functional parameters.

When comparing the two graphs of FIGs 5 and 7, the set of contained nodes differs by the missing negator node. Additionally, the set of contained edges differs too, due to the missing node. The equivalence check based on the method according to the present invention preferably does not consider attributes that have no impact on the behavior of a function block diagram, such as:
- position and order the function blocks are drawn on the function block diagram,
- how connection lines are drawn (routing, including connectors across diagram pages), or
- position of cross-diagram signals in the diagram's input and output area.
Those are purely graphical attributes used for visual display of the function block diagrams and have no effect on the generated code's structure.

Using this method, each instance of function block diagrams can be transformed into a unique dataflow based graph using the functional relevant attributes listed above. By using only functional relevant attributes of function block diagrams for this transformation, the resulting graph representations can be compared. This yields a proof that two function block diagrams are functionally equivalent if their graph representations are identical.

When comparing multiple diagrams which are interconnected using signals, the data flow graphs are preferably analyzed across diagram boundaries. This means that differences in the interconnection of diagrams are detected, too. When evaluating the interconnections between function block diagrams, it is checked whether the compared signals have an equivalent source and destination node

The implemented method preferably allows the user to define where each set of function block diagrams shall be read from. This enables the user to specify either one code generation directory or two separate code generation directories for the comparison. The method is preferably used for
- two sets of diagrams from one version of an application, for example for comparing diagrams between redundancies;
- two sets of diagrams from two versions of the same application, for example to check that only planned changes where introduced, or even
- two sets of diagrams from two different applications, for example to check that copied diagrams were introduced correctly.

Attributes marked as optionally, are only preferably processed when explicitly requested by the user when starting the comparison. By default these attributes are ignored.

## Claims

1. A computer-implemented method for implementing a set of redundant pieces of software within a safety control system, wherein at least two redundant pieces of software are engineered from function block diagrams (120, 196) with a plurality of interconnected function blocks, wherein the safety control system comprises several redundant divisions, each division executing at least one safety function specified in at least one of said function block diagrams, and wherein for said two pieces of software the following steps are applied:
a) generating a first instance of compilable source code from a first plurality of function diagrams (70, 74, 78) by virtue of a first automatic code generator obeying to a first set of sequentialization rules;
b) parsing said first instance of source code and identifying the set of all function block I/O ports and junction points - nodes - and the set of all connections between them - arcs - of the data flow;
c) using the information from step b) to reconstruct a first data flow graph (86) of said first instance of source code in the upstream direction;
d) generating a second instance of compilable source code from a second plurality of function block diagrams (90, 94, 98) by virtue of the same or a second automatic code generator obeying a second set of sequentialization rules;
e) parsing said second instance of source code and identifying the set of all function block I/O ports and junction points - nodes - and the set of all connections between them - arcs - of the data flow;
f) using the information from step e) to reconstruct a second data flow graph (106) of said second instance of source code in the upstream direction;
g) comparing said first identified data flow graph (86) and said second identified data flow graph (106) with each other, node by node, thereby checking if the transitive closure of input up to that node in said second instance of source code is the same as in said first instance of source code, and thereby checking the functional equivalence of the two pieces of software.

2. Method according to claim 1, whereby said second set of sequentialization rules is identical to said first set of sequentialization rules.

3. Method according to claim1 or 2, whereby constructing said first data flow graph (86) in the upstream direction comprises identifying all loops and replacing them with a placeholder such that an infinite recursion is stopped at the loops' delay nodes.

4. Method according to one of the claims 1 to 3, whereby constructing said second data flow graph (106) in the upstream direction comprises identifying all loops and replacing them with a placeholder such that an infinite recursion is stopped at the loops' delay nodes.

5. Method according to one of the claims 1 to 4, whereby an equivalence of said both pieces of software is determined by checking if for each node the transitive closure of input up to that node in said second instance of source code is the same as in said first instance of source code.

6. Method according to one of the claims 1 to 5, whereby said first and/or second plurality of function block diagrams by virtue of said respective first code generator is generated into source code written in the C programming language.

7. Method according to one of the claims 1 to 6, whereby said first and/or said second plurality of function block diagram source codes (70, 74, 78, 90, 94, 98) comprises at least one element of the group: delay block, non-delay block, negator, and whereby said first and/or said second sequentialization complies with defined sequentialization rules.

8. Method according to one of the claims 1 to 7, whereby said first and/or second data flow graph (86, 106) comprises nodes of the following types:
- function block nodes, representing the body of a function block;
- function block port nodes, representing input or output ports of function blocks;
- signal negator nodes, representing the negation of an analog or binary or another type of signal connected at a port of a function block; and
- signal nodes, representing cross-diagram signals or signals assigned to I/O modules.

9. Method according to claim 8, whereby function block nodes comprise as attributes, respectively, the function block type and functionally relevant engineered parameter values, and whereby function block port nodes comprise as attributes, respectively, the direction of the port - input or output for the function block - and an identification of the port of the respective function block.

10. Method according to one of the preceding claims, which is employed for a safety control system in a nuclear power plant.

11. Method according to one of the preceding claims, wherein steps a) to g) are applied with one existing piece of software and with a new piece of software intended to be implemented into the safety control system in replacement of the exiting piece of software.

12. A non-transitory computer-readable storage device, coupled to a computer and having instructions stored thereon which, when executed on said computer, enable and/or cause said computer to perform operations for checking the functional equivalence of two pieces of software for control systems, the operations comprising a method according to one of the claims 1 to 11.

13. A non-transitory computer-readable storage medium containing instructions which, when loaded into memory of and executed on a computer, enable and/or cause the computer to perform operations for checking the functional equivalence of two pieces of software for control systems, the operations comprising a method according to one of the claims 1 to 11.

14. A computer program product, which is stored on a non-transitory computer-readable medium and can be loaded directly into memory of a computer, comprises software code sections which when executed on the computer enables and/or causes said computer to perform a method according to one of the claims 1 to 11.

15. A computer comprising memory having stored thereon software code sections which when executed on said computer enable and/or cause said computer to perform a method according to one of the claims 1 to 11.

## Patentansprüche

1. Computerimplementiertes Verfahren zum Implementieren eines Satzes redundanter Softwares in einem Sicherheitssteuerungssystem, wobei mindestens zwei redundante Softwares aus Funktionsblockdiagrammen (120, 196) mit einer Vielzahl von miteinander verbundenen Funktionsblöcken aufgebaut sind, wobei das Sicherheitssteuerungssystem mehrere redundante Bereiche umfasst, wobei jeder Bereich mindestens eine Sicherheitsfunktion ausführt, die in mindestens einer der Funktionsblockdiagramme spezifiziert ist, und wobei für die beiden Softwares die die folgenden Schritte angewandt werden:
a) Erzeugen einer ersten Instanz von kompilierbarem Quellcode aus einer ersten Vielzahl von Funktionsdiagrammen (70, 74, 78) mittels eines ersten automatischen Codegenerators, der einem ersten Satz von Sequenzialisierungsregeln folgt;
b) Parsen der ersten Instanz des Quellcodes und Identifizieren des Satzes aller Funktionsblock-1/0-Ports und Verbindungspunkte - Knoten - und des Satzes aller Verbindungen zwischen ihnen - Bögen - des Datenflusses;
c) Verwenden der Information aus Schritt b) zum Rekonstruieren eines ersten Datenflussgraphen (86) der ersten Instanz des Quellcodes in der Upstream-Richtung;
d) Erzeugen einer zweiten Instanz von kompilierbarem Quellcode aus einer zweiten Vielzahl von Funktionsblockdiagrammen (90, 94, 98) aufgrund desselben oder eines zweiten automatischen Codegenerators, der einem zweiten Satz von Sequenzialisierungsregeln folgt;
e) Parsen der zweiten Instanz des Quellcodes und Identifizieren des Satzes aller Funktionsblock-1/0-Ports und Verbindungspunkte - Knoten - und des Satzes aller Verbindungen zwischen ihnen - Bögen - des Datenflusses;
f) Verwenden der Information aus Schritt e) zum Rekonstruieren eines zweiten Datenflussgraphen (106) der zweiten Instanz des Quellcodes in der Upstream-Richtung;
g) Vergleichen des ersten identifizierten Datenflussgraphen (86) und des zweiten identifizierten Datenflussgraphen (106) miteinander, Knoten für Knoten, wodurch überprüft wird, ob die transitive Hülle der Eingabe bis zu diesem Knoten in der zweiten Instanz des Quellcodes die gleiche ist wie in der ersten Instanz des Quellcodes, und wodurch die funktionale Äquivalenz der beiden Softwares überprüft wird.

2. Verfahren nach Anspruch 1, wobei der zweite Satz von Sequenzialisierungsregeln identisch ist mit dem ersten Satz von Sequenzialisierungsregeln.

3. Verfahren nach Anspruch 1 oder 2, wobei das Konstruieren des ersten Datenflussgraphen (86) in der Upstream-Richtung das Identifizieren aller Schleifen und deren Ersetzen durch einen Platzhalter umfasst, so dass eine unendliche Rekursion an den Verzögerungsknoten der Schleifen gestoppt wird.

4. Verfahren nach einem der Ansprüche 1 bis 3, wobei das Konstruieren des zweiten Datenflussgraphen (106) in der Upstream-Richtung das Identifizieren aller Schleifen und deren Ersetzen durch einen Platzhalter umfasst, so dass eine unendliche Rekursion an den Verzögerungsknoten der Schleifen gestoppt wird.

5. Verfahren nach einem der Ansprüche 1 bis 4, wobei eine Äquivalenz der beiden Softwares bestimmt wird durch Prüfung, ob für jeden Knoten die transitive Hülle der Eingabe bis zu diesem Knoten in der zweiten Instanz des Quellcodes die gleiche ist wie in der ersten Instanz des Quellcodes.

6. Verfahren nach einem der Ansprüche 1 bis 5, wobei die erste und/oder zweite Vielzahl von Funktionsblockdiagrammen aufgrund des jeweiligen ersten Codegenerators in den in der Programmiersprache C geschriebenen Quellcode erzeugt werden.

7. Verfahren nach einem der Ansprüche 1 bis 6, wobei die erste und/oder die zweite Vielzahl von Funktionsblockdiagramm-Quellcodes (70, 74, 78, 90, 94, 98) mindestens ein Element der Gruppe: Verzögerungsblock, Nichtverzögerungsblock, Negator umfassen; und wobei die erste und/oder die zweite Sequenzialisierung definierte Sequenzialisierungsregeln erfüllen.

8. Verfahren nach einem der Ansprüche 1 bis 7, wobei der erste und/oder zweite Datenflussgraph (86, 106) Knoten der folgenden Typen umfassen:
- Funktionsblock-Knoten, die den Körper eines Funktionsblocks darstellen;
- Funktionsblockport-Knoten, die Eingangs- oder Ausgangsports von Funktionsblöcken darstellen;
- Signalnegator-Knoten, die die Negation eines analogen oder binären oder einer andersartigen Signals darstellen, das an einem Port eines Funktionsblocks angeschlossen ist; und
- Signal-Knoten, die diagrammübergreifende Signale oder Signale, die I/O-Modulen zugeordnet sind, darstellen.

9. Verfahren nach Anspruch 8, wobei Funktionsblock-Knoten als Attribute jeweils den Funktionsblocktyp und funktional relevante technische Parameterwerte umfassen, und wobei Funktionsblockport-Knoten als Attribute jeweils die Richtung des Ports - Eingang oder Ausgang für den Funktionsblock - und eine Identifikation des Ports des jeweiligen Funktionsblocks umfassen.

10. Verfahren nach einem der vorstehenden Ansprüche, das für ein Sicherheitskontrollsystem in einem Kernkraftwerk eingesetzt wird.

11. Verfahren nach einem der vorstehenden Ansprüche, wobei die Schritte a) bis g) mit einer vorhandenen Software und mit einer neuen Software angewendet werden, die dazu bestimmt ist, in das Sicherheitssteuerungssystem anstelle der vorhandenen Software implementiert zu werden.

12. Nichtflüchtige, computerlesbare Speichervorrichtung, die mit einem Computer verbunden ist und darauf gespeicherte Anweisungen aufweist, die bei Ausführung auf dem Computer es dem Computer ermöglichen und/oder ihn veranlassen, Operationen zum Überprüfen der funktionalen Äquivalenz von zwei Softwares für Steuersysteme durchzuführen, wobei die Operationen ein Verfahren nach einem der Ansprüche 1 bis 11 umfassen.

13. Nichtflüchtiges, computerlesbares Speichermedium, das Anweisungen enthält, die, wenn sie in den Speicher eines Computers geladen und auf einem Computer ausgeführt werden, es dem Computer ermöglichen und/oder ihn veranlassen, Operationen zum Überprüfen der funktionalen Äquivalenz von zwei Softwares für Steuersysteme durchzuführen, wobei die Operationen ein Verfahren nach einem der Ansprüche 1 bis 11 umfassen.

14. Computerprogrammprodukt, das auf einem nichtflüchtigen, computerlesbaren Medium gespeichert ist und direkt in den Speicher eines Computers geladen werden kann, umfassend Softwarecodebereiche, die bei Ausführung auf dem Computer es dem Computer ermöglichen und/oder ihn veranlassen, ein Verfahren nach einem der Ansprüche 1 bis 11 durchzuführen.

15. Computer, umfassend einen Speicher, der darauf gespeicherte Softwarecodebereiche aufweist, die, wenn sie auf dem Computer ausgeführt werden, es dem Computer ermöglichen und/oder ihn veranlassen, ein Verfahren nach einem der Ansprüche 1 bis 11 durchzuführen.

## Revendications

1. Procédé mis en oeuvre par ordinateur pour mettre en oeuvre un ensemble de logiciels redondants au sein d'un système de commande de sécurité, dans lequel au moins deux logiciels redondants sont conçus à partir de schémas de blocs fonctionnels (120, 196) avec une pluralité de blocs fonctionnels interconnectés, dans lequel le système de commande de sécurité comprend plusieurs divisions redondantes, chaque division exécutant au moins une fonction de sécurité spécifiée dans au moins l'un desdits schémas de blocs fonctionnels, et dans lequel, pour lesdits deux logiciels, les étapes ci-dessous sont appliquées, consistant à :
a) générer une première instance de code source compilable à partir d'une première pluralité de diagrammes fonctionnels (70, 74, 78) en vertu d'un premier générateur automatique de code régi par un premier ensemble de règles de séquentialisation ;
b) analyser ladite première instance de code source et identifier l'ensemble de tous les ports d'entrée/sortie, I/O, de blocs fonctionnels et points de jonction, autrement dit des « noeuds », et l'ensemble de toutes les connexions entre eux, autrement dit des « arcs », du flux de données ;
c) utiliser les informations de l'étape b) en vue de reconstruire un premier graphe de flux de données (86) de ladite première instance de code source dans la direction amont ;
d) générer une seconde instance de code source compilable à partir d'une seconde pluralité de schémas de blocs fonctionnels (90, 94, 98) en vertu du même générateur automatique de code ou d'un second générateur automatique de code régi par un second ensemble de règles de séquentialisation ;
e) analyser ladite seconde instance de code source et identifier l'ensemble de tous les ports I/O de blocs fonctionnels et points de jonction, autrement dit des « noeuds », et l'ensemble de toutes les connexions entre eux, autrement dit des « arcs », du flux de données ;
f) utiliser les informations de l'étape e) en vue de reconstruire un second graphe de flux de données (106) de ladite seconde instance de code source dans la direction amont ;
g) comparer ledit premier graphe de flux de données identifié (86) et ledit second graphe de flux de données identifié (106), mutuellement, noeud par noeud, ce qui permet de vérifier par conséquent si la fermeture transitive de l'entrée jusqu'à ce noeud dans ladite seconde instance de code source est la même que dans ladite première instance de code source, et de vérifier par conséquent l'équivalence fonctionnelle des deux logiciels.

2. Procédé selon la revendication 1, où ledit second ensemble de règles de séquentialisation est identique audit premier ensemble de règles de séquentialisation.

3. Procédé selon la revendication 1 ou 2, où l'étape de construction dudit premier graphe de flux de données (86) dans la direction amont comprend l'étape consistant à identifier toutes les boucles et à les remplacer par un paramètre fictif de sorte qu'une récursion infinie est interrompue au niveau des noeuds de temporisation des boucles.

4. Procédé selon l'une quelconque des revendications 1 à 3, où l'étape de construction dudit second graphe de flux de données (106) dans la direction amont comprend l'étape consistant à identifier toutes les boucles et à les remplacer par un paramètre fictif de sorte qu'une récursion infinie est interrompue au niveau des noeuds de temporisation des boucles.

5. Procédé selon l'une quelconque des revendications 1 à 4, où une équivalence desdits deux logiciels est déterminée en vérifiant si, pour chaque noeud, la fermeture transitive de l'entrée jusqu'à ce noeud dans ladite seconde instance de code source est la même que dans ladite première instance de code source.

6. Procédé selon l'une quelconque des revendications 1 à 5, où ladite première pluralité et/ou ladite seconde pluralité de schémas de blocs fonctionnels, en vertu dudit premier générateur de code respectif, est générée dans un code source écrit en langage de programmation C.

7. Procédé selon l'une quelconque des revendications 1 à 6, où ladite première pluralité et/ou ladite seconde pluralité de codes source de schémas de blocs fonctionnels (70, 74, 78, 90, 94, 98) comprend au moins un élément du groupe ci-après : bloc de temporisation, bloc sans temporisation, inverseur, et où ladite première séquentialisation et/ou ladite seconde séquentialisation est conforme à des règles de séquentialisation définies.

8. Procédé selon l'une quelconque des revendications 1 à 7, où ledit premier graphe de flux de données et/ou ledit second graphe de flux de données (86, 106) comprend des noeuds des types suivants :
- des noeuds de bloc fonctionnel, représentant le corps d'un bloc fonctionnel ;
- des noeuds de ports de blocs fonctionnels, représentant des ports d'entrée ou de sortie des blocs fonctionnels ;
- des noeuds inverseurs de signal, représentant l'inversion d'un signal analogique ou d'un signal binaire ou d'un autre type de signal connecté au niveau d'un port d'un bloc fonctionnel ; et
- des noeuds de signal, représentant des signaux de schémas en croix ou des signaux affectés à des modules d'entrée/sortie, I/O.

9. Procédé selon la revendication 8, où des noeuds de bloc fonctionnel comprennent, en qualité d'attributs, respectivement, le type de bloc fonctionnel et des valeurs de paramètres techniques fonctionnellement pertinentes, et où les noeuds de ports de blocs fonctionnels comprennent en qualité d'attributs, respectivement, la direction du port, à savoir d'entrée ou de sortie pour le bloc fonctionnel, et une identification du port du bloc fonctionnel respectif.

10. Procédé selon l'une quelconque des revendications précédentes, lequel est employé pour un système de commande de sécurité au sein d'une centrale nucléaire.

11. Procédé selon l'une quelconque des revendications précédentes, dans lequel les étapes a) à g) sont appliquées avec un logiciel existant, ainsi qu'avec un nouveau logiciel qui est destiné à être mis en oeuvre dans le système de commande de sécurité en remplacement du logiciel existant.

12. Dispositif de stockage non transitoire lisible par ordinateur, couplé à un ordinateur et présentant des instructions stockées sur celui-ci qui, lorsqu'elles sont exécutées sur ledit ordinateur, permettent audit ordinateur de, et/ou amènent ledit ordinateur à, mettre en oeuvre des opérations visant à vérifier l'équivalence fonctionnelle de deux logiciels pour des systèmes de commande, les opérations comprenant un procédé selon l'une quelconque des revendications 1 à 11.

13. Support de stockage non transitoire lisible par ordinateur contenant des instructions qui, lorsqu'elles sont chargées dans une mémoire d'un ordinateur et exécutées sur celui-ci, permettent audit ordinateur de, et/ou amènent ledit ordinateur à, mettre en oeuvre des opérations visant à vérifier l'équivalence fonctionnelle de deux logiciels pour des systèmes de commande, les opérations comprenant un procédé selon l'une quelconque des revendications 1 à 11.

14. Produit-programme informatique, lequel est stocké sur un support non transitoire lisible par ordinateur et peut être chargé directement dans la mémoire d'un ordinateur, comprenant des sections de code logiciel qui, lorsqu'elles sont exécutées sur l'ordinateur, permettent audit ordinateur de, et/ou amènent ledit ordinateur à, mettre en oeuvre un procédé selon l'une quelconque des revendications 1 à 11.

15. Ordinateur comprenant une mémoire sur laquelle sont stockées des sections de code logiciel qui, lorsqu'elles sont exécutées sur ledit ordinateur, permettent audit ordinateur de, et/ou amènent ledit ordinateur à, mettre en oeuvre un procédé selon l'une quelconque des revendications 1 à 11.
